(19) Europäisches Patentamt
European Patent Office
Office européen des brevets

(11) **EP 3 417 323 B1**

(12) **EUROPÄISCHE PATENTSCHRIFT**

(45) Veröffentlichungstag und Bekanntmachung des Hinweises auf die Patenterteilung:
**25.01.2023 Patentblatt 2023/04**

(21) Anmeldenummer: **17709918.1**

(22) Anmeldetag: **17.02.2017**

(51) Internationale Patentklassifikation (IPC):
**G02B 6/126** (2006.01)    **G02B 6/14** (2006.01)
**G02B 6/27** (2006.01)

(52) Gemeinsame Patentklassifikation (CPC):
**G02B 6/126; G02B 6/14; G02B 6/2766**

(86) Internationale Anmeldenummer:
**PCT/EP2017/053660**

(87) Internationale Veröffentlichungsnummer:
**WO 2017/140871 (24.08.2017 Gazette 2017/34)**

(54) **VERFAHREN ZUM HERSTELLEN EINES POLARISATIONSKONVERTERS, POLARISATIONSKONVERTER UND POLARISATIONSKONVERTERELEMENT**

METHOD FOR PRODUCING A POLARIZATION CONVERTER, POLARIZATION CONVERTER AND POLARIZATION CONVERTER ELEMENT

PROCÉDÉ DE FABRICATION D'UN CONVERTISSEUR DE POLARISATION, CONVERTISSEUR DE POLARISATION ET ÉLÉMENT DE CONVERTISSEUR DE POLARISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2016 DE 102016202634**

(43) Veröffentlichungstag der Anmeldung:
**26.12.2018 Patentblatt 2018/52**

(73) Patentinhaber: **Fraunhofer-Gesellschaft zur Förderung der angewandten Forschung e.V. 80686 München (DE)**

(72) Erfinder:
• **BAIER, Moritz**
  **10715 Berlin (DE)**
• **SOARES, Francisco**
  **10555 Berlin (DE)**

(74) Vertreter: **Maikowski & Ninnemann Patentanwälte Partnerschaft mbB Postfach 15 09 20 10671 Berlin (DE)**

• **JOS J G M VAN DER TOL ET AL: "Increasing Tolerance in Passive Integrated Optical Polarization Converters"**, JOURNAL OF LIGHTWAVE TECHNOLOGY, IEEE SERVICE CENTER, NEW YORK, NY, US, Bd. 30, Nr. 17, 1. September 2012 (2012-09-01), Seiten 2884-2889, XP011457929, ISSN: 0733-8724, DOI: 10.1109/JLT.2012.2204039
• **TZOLOV V P ET AL: "A passive polarization converter free of longitudinally-periodic structure"**, OPTICS COMMUNICATIONS, ELSEVIER, AMSTERDAM, NL, Bd. 127, Nr. 1, 1. Juni 1996 (1996-06-01), Seiten 7-13, XP004007479, ISSN: 0030-4018, DOI: 10.1016/0030-4018(96)00039-9
• **HENGHUA DENG ET AL: "Design rules for slanted-angle polarization rotators"**, JOURNAL OF LIGHTWAVE TECHNOLOGY, Bd. 23, Nr. 1, 1. Januar 2005 (2005-01-01) , Seiten 432-445, XP055052458, ISSN: 0733-8724, DOI: 10.1109/JLT.2004.834477

(56) Entgegenhaltungen:
EP-A1- 0 645 650         WO-A1-97/11396
WO-A1-2013/083493     US-A1- 2010 002 989

- **BAIER M ET AL: "Highly fabrication tolerant polarization converter for generic photonic integration technology", 2016 COMPOUND SEMICONDUCTOR WEEK (CSW) [INCLUDES 28TH INTERNATIONAL CONFERENCE ON INDIUM PHOSPHIDE & RELATED MATERIALS (IPRM) & 43RD INTERNATIONAL SYMPOSIUM ON COMPOUND SEMICONDUCTORS (ISCS), IEEE, 26. Juni 2016 (2016-06-26), Seiten 1-2, XP032935371, DOI: 10.1109/ICIPRM.2016.7528537 [gefunden am 2016-08-01]**

**Beschreibung**

Die Erfindung betrifft ein Verfahren zum Herstellen eines Polarisationskonverters gemäß dem Oberbegriff des Anspruchs 1 und einen Polarisationskonverter gemäß dem Oberbegriff des Anspruchs 8.

Polarisationskonverter werden beispielweise im Bereich der integrierten Optik (zum Beispiel für photonische Schaltkreise) benötigt, um den Polarisationszustand (insbesondere die Polarisationsebene) einer Lichtwelle kontrollieren und insbesondere verändern zu können. Bekannt sind zum Beispiel Polarisationskonverter, die einen Wellenleiter mit einer zu einer Grund- und Oberseite geneigten Längsseite aufweisen. Bei der Herstellung derartiger Polarisationskonverter ist allerdings die Einhaltung recht enger Toleranzen erforderlich, um eine effiziente Polarisationskonversion zu realisieren. So muss zum Beispiel bei einem einteiligen Polarisationskonverter die Herstellung der Oberseite des Polarisationskonverters mit einer Toleranz von weniger als 50 nm erfolgen, um eine Konversionseffizienz von mindestens 95 % zu erhalten. Etwas großzügigere Toleranzen ermöglicht die Verwendung zweier hintereinander und spiegelsymmetrisch zueinander angeordneter Polarisationselemente (Konverterelemente); vgl. Beispiel WO 2013/083493 A1. Allerdings sind auch bei diesem Konzept Toleranzanforderungen zu erfüllen, die einer Massenherstellung derartiger Polarisationskonverter entgegenstehen.

Das der Erfindung zugrunde liegende Problem besteht darin, eine Herstellung eines Polarisationskonverters mit möglichst großen Toleranzen zu ermöglichen.

Dieses Problem wird durch die Schaffung des Verfahrens mit den Merkmalen des Anspruchs 1 und durch die Bereitstellung des Polarisationskonverters mit den Merkmalen des Anspruchs 8 gelöst.

Danach wird ein Verfahren zum Herstellen eines Polarisationskonverters bereitgestellt, mit den Schritten:

- Erzeugen eines ersten Konverterelementes, das eine Grundseite, eine parallel zur Grundseite verlaufende Oberseite sowie eine schräg unter einem Winkel $\varepsilon_1$ zur Grundseite orientierte Längsseite oder eine gekrümmte Längsseite aufweist;
- Erzeugen eines zweiten Konverterelementes, das eine Grundseite, eine parallel zur Grundseite verlaufende Oberseite sowie eine schräg unter einem Winkel $\varepsilon_2$ zur Grundseite orientierte Längsseite oder eine gekrümmte Längsseite aufweist;
- Anordnen des ersten und des zweiten Konverterelementes derart hintereinander, dass die schräg orientierten bzw. gekrümmten Längsseiten in entgegengesetzte Richtungen weisen, wobei
- das erste Konverterelement eine Länge $L_1$ aufweist und seine Oberseite eine senkrecht zur Längsrichtung des ersten Konverterelementes gemessene Breite $w_1$ besitzt; und
- das zweite Konverterelement eine Länge $L_2$ aufweist und seine Oberseite eine senkrecht zur Längsrichtung des zweiten Konverterelementes gemessene Breite $w_2$ besitzt, und wobei
- das Erzeugen des ersten und des zweiten Konverterelementes ein Bestimmen von derartigen unterschiedlichen Längen $L_1$ und $L_2$ sowie unterschiedlichen Breiten $w_1$ und $w_2$ und/oder unterschiedlichen Winkeln $\varepsilon_1$ und $\varepsilon_2$ umfasst, dass eine zunächst parallel zu den Grundseiten der Konverterelemente polarisierte Lichtwelle nach Durchlaufen des

ersten und des zweiten Konverterelementes senkrecht zu den Grundseiten der Konverterelemente polarisiert ist.

Gemäß dem erfindungsgemäßen Verfahren werden somit zur Dimensionierung der Konverterelemente nicht nur ihre Längen $L_1$ und $L_2$, sondern auch die Breiten $w_1$ und $w_2$ und/oder die Winkel $\varepsilon_1$ und $\varepsilon_2$ variiert, wobei die beiden Konverterelemente durchaus unterschiedliche Breiten $w_1$ und $w_2$ und Winkel $\varepsilon_1$ und $\varepsilon_2$ aufweisen, d.h. die Konverterelemente weisen unterschiedliche (und nicht nur spiegelsymmetrisch zueinander orientierte) Querschnitte auf.

Dies bedeutet insbesondere, dass keine der sich in dem ersten bzw. dem zweiten Konverterelement ausbreitenden Moden eine Polarisation aufweist, die mit der jeweiligen Grundseite des Konverterelementes (d.h. mit der Horizontalen) einen Winkel von 45° bildet. Insbesondere sind die Breiten $w_1$ und $w_2$ und/oder die Winkel $\varepsilon_1$ und $\varepsilon_2$ so gewählt, dass die Polarisationsebenen der sich in dem ersten und dem zweiten Konverterelement ausbreitenden Moden unterschiedliche Winkel mit den jeweiligen Grundseiten (d.h. mit der Horizontalen) einschließen. Mit anderen Worten ermöglicht die Erfindung ein Design des ersten und des zweiten Konverterelementes, das nicht darauf festgelegt ist, dass die Winkel, unter denen die Moden in dem ersten und dem zweiten Konverterelement polarisiert sind, gleich sind und 45° betragen.

Die Vermeidung der Festlegung auf einen Polarisationswinkel von 45° der Moden in den Konverterelementen ermöglicht deutlich größere Toleranzbereiche bei der Herstellung der Konverterelemente. Dies ist damit zu erklären, dass die Abhängigkeit des jeweiligen Polarisationswinkels der Moden und auch der Beatlänge von der Breite $w_1$ bzw. $w_2$ der Konverterelemente relativ starke Gradienten bei einem Polarisationswinkel von 45° aufweist. Als Beatlänge $L_\pi$ wird die Länge eines Polarisationskonverterelementes (z.B. des ersten oder des zweiten Konverterelementes) bezeichnet, bei der das Polarisationskonverterelement eine Eingangspolarisation um 90° dreht. Es ist:

$$L_\pi = \frac{\lambda}{2(n_{00} - n_{01})}$$

wobei
$n_{00}$, $n_{01}$ die Brechungsindizes der sich in dem ersten und zweiten Konverterelement ausbreitenden Moden $\vec{e}_{00}$ und $\vec{e}_{01}$ bezeichnet.

Mit dem erfindungsgemäßen Verfahren ist es insbesondere möglich, die Toleranzen bei der Herstellung der Konverterelemente und damit des Polarisationskonverters so zu vergrößern, dass zum Beispiel eine kontaktlithografische Herstellung der Konverterelemente möglich ist. Beispielsweise können Toleranzen von mehr als 250 nm zulässig sein, um eine Konversionseffizienz oberhalb von 95 % zu erreichen.

Gemäß einer Ausgestaltung der Erfindung erfolgt das Bestimmen der unterschiedlichen Längen $L_1$ und $L_2$ sowie der unterschiedlichen Breiten $w_1$ und $w_2$ und/oder der unterschiedlichen Winkel $\varepsilon_1$ und $\varepsilon_2$ unter Verwendung eines numerischen Optimierungsverfahrens mit den Größen $L_1$, $L_2$ sowie $w_1$, $w_2$ und/oder $\varepsilon_1$, $\varepsilon_2$ als veränderliche Parameter.

Zum Durchführen des Optimierungsverfahrens wird zum Beispiel eine Fehlerfunktion (Zielfunktion) bestimmt und mit dem Optimierungsverfahren mindestens eine Nullstelle der Zielfunktion ermittelt. Beispielsweise wird zur Bestimmung der Zielfunktion die Anordnung aus dem ersten und dem zweiten Konverterelement durch eine Jones-Matrix J beschrieben, wobei sich die aus dem zweiten Konverterelement austretende Lichtwelle $\vec{E}_{out}$ über den Jones-Vektor J aus der in das erste Konverterelement eintretenden Lichtwelle $\vec{E}_{TE}$ ergibt, wobei

$$\vec{E}_{out} = J\vec{E}_{TE}$$

$$\vec{E}_{TE} = \begin{pmatrix} 1 \\ 0 \end{pmatrix}$$

Das Optimierungsverfahren kann nun dazu dienen, Werte der Längen $L_1$, $L_2$, der Breiten $w_1$, $w_2$ und/oder der Winkel $\varepsilon_1$, $\varepsilon_2$ so zu bestimmen, dass die Elemente auf der Hauptdiagonalen von J verschwinden. Somit ist die z.B. die x-Komponente von aus dem zweiten Konverterelement austretendem Licht $\vec{E}_{out}$ Null.

Beispielsweise ergibt sich für $\vec{E}_{out}$ unter Verwendung eines analytischen Modells für die Anordnung aus dem ersten und dem zweiten Konverterelement (d.h. für den Jones-Vektor):

$$E_{out} = \begin{bmatrix} \left( \left( e^{2i\pi\delta_1} \sin^2(\alpha_1) + \cos^2(\alpha_1) \right) \left( e^{2i\pi\delta_2} \sin^2(\alpha_2) + \cos^2(\alpha_2) \right) + \frac{1}{8} \left( e^{2i\pi\delta_1} - 1 \right) \left( e^{2i\pi\delta_2} - 1 \right) \left( \cos(2\alpha_1 - 2\alpha_2) - \cos(2\alpha_1 + 2\alpha_2) \right) \right) e^{i\pi(-\delta_1 - \delta_2)} \\ \left( \left( e^{2i\pi\delta_1} \sin^2(\alpha_1) + \cos^2(\alpha_1) \right) \left( -e^{2i\pi\delta_2} + 1 \right) \sin(\alpha_2) \cos(\alpha_2) + \left( e^{2i\pi\delta_2} \cos^2(\alpha_2) + \sin^2(\alpha_2) \right) \left( -e^{2i\pi\delta_1} + 1 \right) \sin(\alpha_1) \cos(\alpha_1) \right) e^{-i\pi(\delta_1 + \delta_2)} \end{bmatrix}$$

Dabei ist

$$\delta_{1,2} = \frac{\Delta n L_{1,2}}{\lambda}$$

sowie

$$\alpha_{1,2} = \alpha_{1,2}(w_{1,2})$$

wobei
$\Delta n$, die Differenz der Brechungsindizes der sich in dem ersten und zweiten Konverterelement jeweils ausbreitenden, senkrecht zueinander polarisierten Moden $\vec{e}_{00}$ und $\vec{e}_{01}$ ist, und wobei $\alpha_1$ den Winkel bezeichnet, unter dem die sich in dem ersten Konverterelement ausbreitende erste Mode $\vec{e}_{00}$ gegenüber der Horizontalen (der Grundseite des Konverterelementes) polarisiert ist. Analog bezeichnet $\alpha_2$ den Polarisationswinkel der sich in dem zweiten Konverterelement ausbreitenden Mode $\vec{e}_{00}$.

Eine Nullstelle für die x-Komponente von $\vec{E}_{out}$ ergibt sich für $\alpha_1 = \alpha_2 = 45°$, $\delta_1 = 0.25$, $\delta_2 = -0.75$.

Es existieren jedoch weitere Nullstellen für $\alpha_1 \neq \alpha_2$, die mit dem erwähnten numerischen Optimierungsverfahren durch Variation von $L_1$, $L_2$ sowie $w_1$, $w_2$ und/oder $\varepsilon_1$, $\varepsilon_2$ bestimmt werden.

Denkbar ist darüber hinaus, dass die Länge des ersten Konverterelementes und/oder die Länge des zweiten Konverterelementes ein rationaler Bruch der jeweiligen Beatlänge (s.o.) ist.

Die Längsseite des ersten und/oder des zweiten Konverterelementes verläuft insbesondere zumindest im Wesentlichen plan und unter dem Winkel mit der jeweiligen Grundseite des Konverterelementes.

Denkbar ist allerdings auch, dass die Längsseite des ersten und/oder des zweiten Konverterelementes eine (konkave) Krümmung aufweist. Beispielsweise bestimmt der Radius dieser Krümmung die Breite des Konverterelementes. Möglich ist darüber hinaus, dass die gekrümmte Längsseite mit einem Ätzverfahren erzeugt wird, wobei die Ätzdauer insbesondere den Radius der Krümmung festlegt.

Die Erfindung betrifft auch einen Polarisationskonverter, mit

- einem ersten Konverterelement, das eine Grundseite, eine parallel zur Grundseite verlaufende Oberseite sowie eine schräg unter einem Winkel $\varepsilon_1$ zur Grundseite orientierte Längsseite oder eine gekrümmte Längsseite aufweist;
- einem zweiten Konverterelement, das ebenfalls eine Grundseite, eine parallel zur Grundseite verlaufende Oberseite sowie eine schräg unter einem Winkel $\varepsilon_2$ zur Grundseite orientierte Längsseite oder eine gekrümmte Längsseite aufweist, wobei
- das erste und das zweite Konverterelement derart hintereinander angeordnet sind, dass die schräg orientierten bzw. gekrümmten Längsseiten in entgegengesetzte Richtungen weisen, wobei
- das erste Konverterelement eine Länge $L_1$ aufweist, die von der Länge $L_2$ des zweiten Konverterelementes verschieden ist, und wobei
- die Oberseite des ersten Konverterelementes eine senkrecht zur Längsrichtung des ersten Konverterelementes gemessene Breite $w_1$ besitzt, die von der Breite $w_2$ des zweiten Konverterelementes verschieden ist, und/oder
- die Längsseite des ersten Konverterelementes mit der Grundseite des ersten Konverterelementes einen Winkel $\varepsilon_1$ bildet, der von dem Winkel $\varepsilon_2$, den die Längsseite des zweiten Konverterelementes mit der Grundseite des zweiten Konverterelementes bildet, verschieden ist.

Der Polarisationskonverter ist insbesondere mit dem oben beschriebenen Verfahren hergestellt. Entsprechend können die oben bereits erläuterten Varianten der Erfindung analog auch auf den erfindungsgemäßen Polarisationskonverter angewendet werden.

Das erste und/oder das zweite Konverterelement des erfindungsgemäßen Polarisationskonverters weisen beispielsweise jeweils einen trapezförmigen Querschnitt auf.

Bei dem ersten und dem zweiten Konverterelement handelt es sich beispielsweise um ein Halbleiterbauelement. Denkbar ist insbesondere, dass Licht in das erste Konverterelement über einen optischen Wellenleiter (zum Beispiel einen integriert-optischen Wellenleiter) eingekoppelt und über einen weiteren optischen Wellenleiter (zum Beispiel über einen weiteren integriert-optischen Wellenleiter) aus dem zweiten Konverterelement ausgekoppelt wird. Denkbar ist auch, dass der erfindungsgemäße Polarisationskonverter mehr als zwei hintereinander angeordnete Konverterelemente aufweist.

Möglich ist zudem, dass das erste und das zweite Konverterelement jeweils zumindest eine auf einem Substrat angeordnete Halbleiterschicht aufweisen, wobei eine Oberseite des jeweiligen Substrats die jeweilige Grundseite des Konverterelementes definiert. Beispielsweise sind die Breiten und/oder die Winkel wie oben bereits erwähnt so gewählt, dass sich in dem ersten und dem zweiten Konverterelement jeweils eine Mode ausbreitet, deren Polarisationsebene mit der jeweiligen Grundseite des Konverterelementes einen von 45° verschiedenen Winkel bildet.

Wie oben bereits ebenfalls erwähnt, sind die Breiten und/oder die Winkel insbesondere so gewählt, dass die Winkel, die die Polarisationsebenen der sich in dem ersten Konverterelement ausbreitenden Moden mit der Grundseite des ersten Konverterelementes bilden, verschieden sind von den Winkeln, die die Polarisationsebenen der sich in dem zweiten Konverterelement ausbreitenden Moden mit der Grundseite des zweiten Konverterelementes bilden.

Darüber hinaus müssen die Längen $L_1$ und $L_2$ keine ganzzahligen Vielfachen voneinander sein, d.h. weder muss die Länge $L_1$ ein ganzzahliges Vielfaches der Länge $L_2$ sein, noch muss umgekehrt die Länge $L_2$ ein ganzzahliges Vielfaches der Länge $L_1$ sein.

Ein Polarisationskonverterelement kann eine Grundseite, eine parallel zur Grundseite verlaufende Oberseite sowie einer Längsseite, die eine Krümmung aufweist, aufweisen. Ein derartiges Polarisationskonverterelement kann als Einzelelement einen Polarisationskonverter ausbilden. Denkbar ist jedoch auch, dass es als Konverterelement in einem zweiteiligen Polarisationskonverter eingesetzt wird oder ein Polarisationskonverter zwei derartiger Polarisationskonverterelemente aufweist, wie oben bereits erwähnt.

Die Erfindung wird im Folgenden anhand von Ausführungsbeispielen unter Bezugnahme auf die Figuren näher erläutert. Es zeigen:

Figur 1    schematisch eine Seitenansicht eines Polarisationskonverters gemäß einem Ausführungsbeispiel der Erfindung;

Figur 2    eine Schnittansicht eines erfindungsgemäßen Polarisationskonverterelementes;

Figur 3    eine Darstellung der Konversionseffizienz in Abhängigkeit von der Breite eines Konverterelementes eines konventionellen Polarisationskonverters; und

Figur 4    eine Darstellung der Abhängigkeit der Konversionseffizienz von der Breite eines der Konverterelemente eines erfindungsgemäßen Polarisationskonverters.

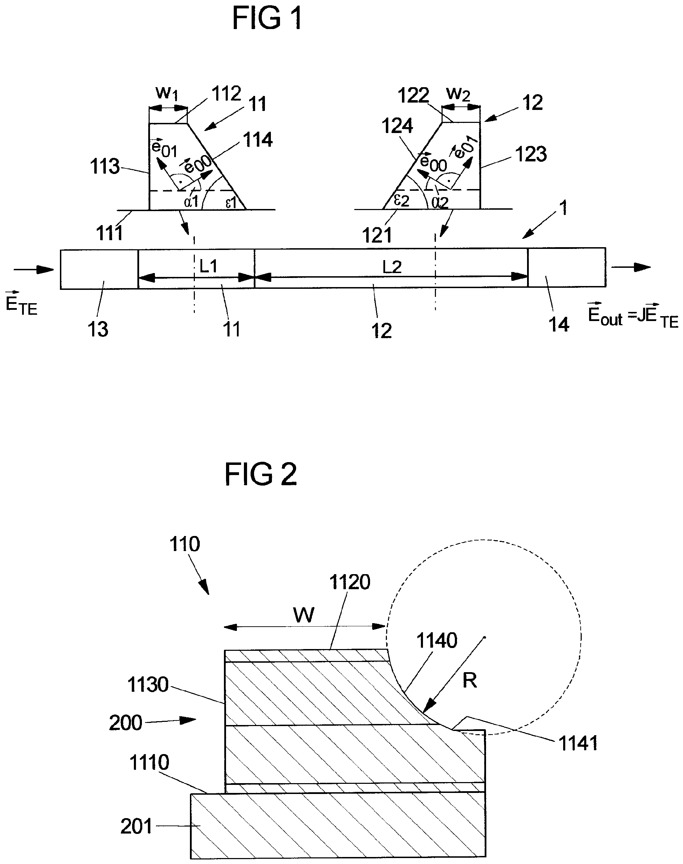

Der in Figur 1 schematisch dargestellte Polarisationskonverter 1 weist ein erstes und ein zweites Konverterelement 11, 12 auf. Die beiden Konverterelemente 11, 12 sind angrenzend aneinander hintereinander (entlang ihrer Längsachsen) angeordnet, wobei die Einkopplung von Licht in den Polarisationskonverter 1 über das erste Konverterelement 11 und die Lichtauskopplung über das zweite Konverterelement 12 erfolgt. Genauer weist der Polarisationskonverter 1 einen Einkoppelwellenleiter 13 auf, über den Licht in das erste Konverterelement 11 und damit in den Polarisationskonverter 1 eingekoppelt wird. Des Weiteren ist ein zweiter Auskoppelwellenleiter 14 vorhanden, über den Licht aus dem zweiten Konverterelement 12 und damit aus dem Polarisationskonverter 1 auskoppelbar ist. Möglich ist grundsätzlich auch, dass die Konverterelemente 11, 12 mit einem Abstand voneinander angeordnet sind.

Die in Figur 1 auch enthaltenen Schnittdarstellungen zeigen jeweils einen Querschnitt des ersten bzw. zweiten Konverterelementes 11, 12. Danach weist das erste Konverterelement 11 einen trapezförmigen Querschnitt mit einer Grundseite 111 sowie einer zu der Grundseite 111 parallelen Oberseite 112 mit einer Breite $w_1$ auf. Darüber hinaus besitzt das erste Konverterelement 11 zwei Längsseiten 113, 114, von denen die eine (die Längsseite 113) senkrecht zu der Grund- bzw. Oberseite 111, 112 verläuft. Die andere Längsseite 114 ist schräg und zwar unter einem Winkel $\varepsilon_1$ zu der Grund- und der Oberseite 111, 112 orientiert. Die Grundseiten 111, 112 können durch jeweils über die Längsseiten 113, 114 hinausragenden Oberflächen (z.B. eines Substrats) definiert sein. Die Konverterelemente 11, 12 sind insbesondere so angeordnet ist, dass sich ihre Grundseiten 111, 121 auf einer Höhe und parallel zueinander erstrecken.

Das zweite Konverterelement 12 besitzt ebenfalls einen trapezförmigen Querschnitt mit einer Grund- und einer Oberseite 121, 122 sowie einer hierzu senkrecht verlaufenden Längsseite 123 und einer schräg (unter einem Winkel $\varepsilon_2$) zu der Grund- und Oberseite 121, 122 orientierten Längsseite 124. Die Oberseite 122 besitzt eine Breite $w_2$.

Das erste und das zweite Konverterelement 11, 12 sind so hintereinander (entlang der Ausbreitungsrichtung des in den Polarisationskonverter 1 eingekoppelten Lichtes) angeordnet, dass die schräg orientierten Längsseiten 114, 124 in entgegengesetzte Richtungen weisen.

Die Konverterelemente 11, 12 weisen unterschiedliche Längen $L_1$, $L_2$ auf, wobei die Länge $L_1$ kleiner ist als die Länge $L_2$. Darüber hinaus sind auch die Breiten $w_1$, $w_2$ und/oder die Winkel $\varepsilon_1$, $\varepsilon_2$, die die schrägen Längsseiten 114, 124 mit der Grundseite 111, 121 jeweils einschließen, unterschiedlich.

Die Längen $L_1$, $L_2$, die Breiten $w_1$, $w_2$ und/oder die Winkel $\varepsilon_1$, $\varepsilon_2$ wurden wie oben erläutert mit Hilfe eines Optimierungsalgorithmus so bestimmt, dass die Polarisation einer in den Polarisationskonverter 1 (d.h. in das erste Konverterelement 11) eintretenden Lichtwelle beim Durchgang durch den Polarisationskonverter (d.h. durch das erste und das zweite Konverterelement 11, 12) um 90° gedreht wird. Beispielsweise wird die beim Eintreten in das erste Konverterelement 11 parallel zur Grundseite 111 des ersten Konverterelementes 11 orientierte Polarisation einer Lichtwelle $\vec{E}_{TE}$ beim Durchlaufen des Polarisationskonverters 1 so gedreht, dass die aus dem zweiten Konverterelement 12 austretende Lichtwelle $\vec{E}_{out}$ senkrecht zur Grundseite 121 des zweiten Konverterelementes 12 ausgerichtet ist.

Wie oben ebenfalls bereits ausgeführt, sind die Breiten $w_1$, $w_2$ und/oder die Winkel $\varepsilon_1$, $\varepsilon_2$ so bestimmt, dass die Winkel $\alpha_1$, $\alpha_2$, die die Polarisationsebenen der sich in dem ersten und zweiten Konverterelement 11, 12 jeweils ausbreitenden Moden $\vec{e}_{00}$ mit der jeweiligen Grundseite 111, 121 einschließen, unterschiedlich sind. Insbesondere sind die Winkel $\alpha_1$, $\alpha_2$ größer oder kleiner als 45°.

Figur 2 betrifft eine Ausführung eines erfindungsgemäßen Polarisationskonverterelementes 110, wobei in Fig. 2 ein Schnitt durch das Polarisationskonverterelementes 110 senkrecht zu seiner Längsachse dargestellt ist. Das Polarisationskonverterelementes 110 besitzt zwar analog zu den Konverterelementen der Fig. 1 eine Grundseite 1110, eine dazu parallele Oberseite 1120 sowie eine weitere Längsseite 1130, die sich senkrecht zur Oberseite 1120 und zur Grundseite 1110 erstreckt. Allerdings weist das Polarisationskonverterelement 110 keinen rein trapezförmigen Querschnitt auf.

Vielmehr ist anstelle einer schräg zu der Grundseite 1110 orientierten ebenen Längsseite eine konkav gekrümmte Längsseite 1140 vorhanden (mit einer Krümmung 1141). Die Konversionseigenschaften des Polarisationskonverterelementes 110 werden jedoch ebenfalls insbesondere durch die Breite w der Oberseite 1120 bestimmt. Darüber hinaus kann der Radius R der Krümmung 1141 der Längsseite 1140 die Konversionseigenschaften beeinflussen. Somit kann das Konversionsverhalten des Polarisationskonverterelementes 110 auch über an eine Anpassung des Krümmungsradius R erfolgen.

Das Polarisationskonverterelement 110 ist aus einer Mehrzahl von Halbleiterschichten 200 gebildet, die auf einem Substrat 201 angeordnet sind. Beispielsweise erfolgt die Erzeugung der gekrümmten Längsseite 1140 per Ätzverfahren, wobei über die Dauer der Ätzung der Radius R (und damit auch die Breite w der Oberseite 1120) eingestellt werden kann.

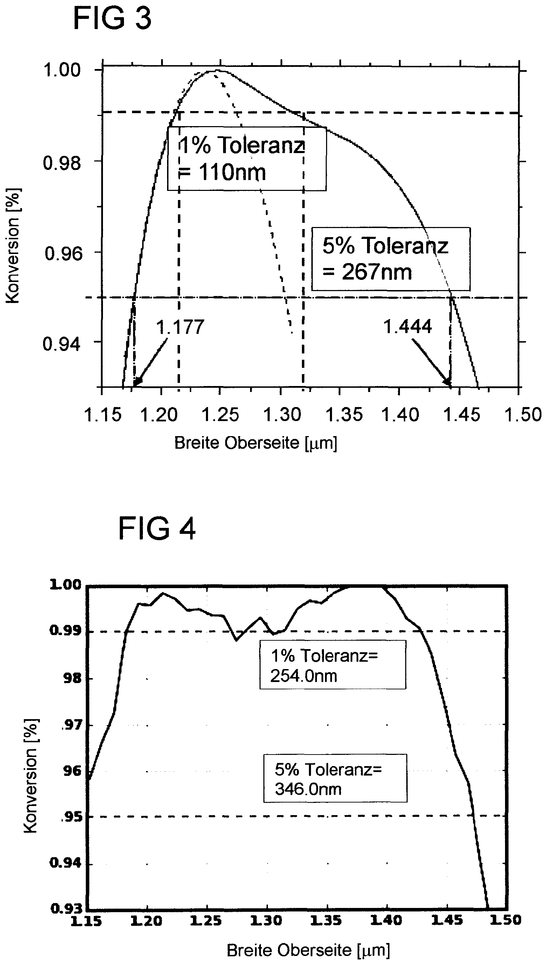

Figur 3 illustriert den Zusammenhang zwischen der Konversionseffizienz (y-Achse) und der Breite der Oberseite eines Konverterelementes eines konventionellen Polarisationskonverters. Dargestellt sind dabei der Fall eines Polarisationskonverters mit nur einem Konverterelement (gestrichelte Linie) und eines Polarisationskonverters mit zwei Konverterelementen (durchgezogene Linie). Um eine Konversionseffizienz von mindestens 99 % zu erhalten, d.h. 99 % der Intensität der Eingangswelle befindet sich in einer Ausgangswelle mit einer um 90° gedrehten Polarisation, ist demnach im Falle des Polarisationskonverters mit zwei Konverterelementen eine Toleranz von etwa 110 nm erforderlich. Für eine Konversionseffizienz oberhalb von nur 95 % sind noch etwa 270 nm Toleranz erforderlich.

Figur 4 illustriert die Abhängigkeit der Konversionseffizienz von der Breite $w_1$ bzw. $w_2$ eines der Konverterelemente des erfindungsgemäßen Polarisationskonverters. Hiernach sind die Anforderungen an die Toleranz deutlich geringer. So wird eine Konversionseffizienz von 99 % bereits mit einer Toleranz von etwa 250 nm erreicht. Für eine Konversionseffizienz oberhalb von von 95 % reicht sogar eine Toleranz von ca. 350 nm. Bei Verwendung von Konverterelementen mit gekrümmten Längsseiten (Fig. 2) sind noch größere Toleranzen erzielbar (z.B. 450 nm bei 99 % Konversionseffizienz und 530 nm bei 95 % Konversionseffizienz).

## Patentansprüche

1. Verfahren zum Herstellen eines Polarisationskonverters, mit den Schritten:

   - Erzeugen eines ersten Konverterelementes (11), das eine Grundseite (111), eine parallel zur Grundseite (111) verlaufende Oberseite (112) sowie eine schräg unter einem Winkel $\varepsilon_1$ zur Grundseite (111) orientierte Längsseite (114) oder eine gekrümmte Längsseite aufweist;
   - Erzeugen eines zweiten Konverterelementes (12), das eine Grundseite (121), eine parallel zur Grundseite (121) verlaufende Oberseite (122) sowie eine schräg unter einem Winkel $\varepsilon_2$ zur Grundseite orientierte Längsseite (124) oder eine gekrümmte Längsseite aufweist;
   - Anordnen des ersten und des zweiten Konverterelementes (11, 12) derart hintereinander, dass die schräg orientierten bzw. gekrümmten Längsseiten (114, 124, 1240) in entgegengesetzte Richtungen weisen, wobei
   - das erste Konverterelement (11) eine Länge $L_1$ aufweist und seine Oberseite (111) eine senkrecht zur Längsrichtung des ersten Konverterelementes (11) gemessene Breite $w_1$ besitzt; und
   - das zweite Konverterelement (12) eine Länge $L_2$ aufweist und seine Oberseite (111) eine senkrecht zur Längsrichtung des zweiten Konverterelementes (12) gemessene Breite $w_2$ besitzt,

   **dadurch gekennzeichnet, dass**
   das Erzeugen des ersten und des zweiten Konverterelementes (11, 12) ein Bestimmen von derartigen unterschiedlichen Längen $L_1$ und $L_2$ sowie unterschiedlichen Breiten $w_1$ und $w_2$ und/oder unterschiedlichen Winkeln $\varepsilon_1$ und $\varepsilon_2$ umfasst, dass eine zunächst parallel zu den Grundseiten (111, 121) der Konverterelemente (11, 12) polarisierte Lichtwelle nach Durchlaufen des ersten und des zweiten Konverterelementes (11, 12) senkrecht zu den Grundseiten (111, 121) der Konverterelemente polarisiert ist, wobei die Breiten $w_1$, $w_2$ und/oder die Winkel $\varepsilon_1$, $\varepsilon_2$ so gewählt werden, dass sich in dem ersten und dem zweiten Konverterelement (11, 12) jeweils eine Mode ($\vec{e}_{00}$) ausbreitet, deren Polarisationsebene mit der jeweiligen Grundseite (111, 121) des Konverterelementes (11, 12) einen von 45° verschiedenen Winkel bildet.

2. Verfahren nach Anspruch 1, **dadurch gekennzeichnet, dass** das Bestimmen der unterschiedlichen Längen $L_1$ und $L_2$ sowie der unterschiedlichen Breiten $w_1$ und $w_2$ und/oder der unterschiedlichen Winkel $\varepsilon_1$ und $\varepsilon_2$ unter Verwendung eines numerischen Optimierungsverfahrens mit den Größen $L_1$, $L_2$ sowie $w_1$, $w_2$ und/oder $\varepsilon_1$, $\varepsilon_2$ als veränderliche Parameter erfolgt.

3. Verfahren nach Anspruch 2, **dadurch gekennzeichnet, dass** die Anordnung aus dem ersten und dem zweiten Konverterelement (11, 12) durch eine Jones-Matrix beschrieben wird.

4. Verfahren nach Anspruch 2 und 3, **dadurch gekennzeichnet, dass** die Komponenten der Jones-Matrix jeweils von $L_1$, $L_2$ sowie $w_1$, $w_2$ und/oder $\varepsilon_1$, $\varepsilon_2$ abhängen, wobei mit Hilfe des Optimierungsverfahrens $L_1$, $L_2$ sowie $w_1$, $w_2$ und/oder $\varepsilon_1$, $\varepsilon_2$ so bestimmt werden, dass eine der Komponenten einer aus dem zweiten Konverterelement (12) austretenden Lichtwelle null wird.

5. Verfahren nach einem der vorhergehenden Ansprüche, **dadurch gekennzeichnet, dass** die Länge $L_1$ des ersten Konverterelementes (11) und/oder die Länge $L_2$ des zweiten Konverterelementes (12) ein rationaler Bruch der jeweiligen Beatlänge ist.

6. Verfahren nach einem der vorhergehenden Ansprüche, **dadurch gekennzeichnet, dass** die Längsseite des ersten und/oder des zweiten Konverterelementes (11, 12) eine Krümmung aufweist.

7. Verfahren nach Anspruch 6, **dadurch gekennzeichnet, dass** die gekrümmte Längsseite mit einem Ätzverfahren erzeugt wird.

8. Polarisationskonverter, der insbesondere mit dem Verfahren gemäß einem der Ansprüche 1 bis 7 hergestellt ist, mit

- einem ersten Konverterelement (11), das eine Grundseite (111), eine parallel zur Grundseite (111) verlaufende Oberseite (112) sowie eine schräg unter einem Winkel $\varepsilon_1$ zur Grundseite (111) orientierte Längsseite (114) oder eine gekrümmte Längsseite aufweist;
- einem zweiten Konverterelement (12), das ebenfalls eine Grundseite (121), eine parallel zur Grundseite (121) verlaufende Oberseite (122) sowie eine schräg unter einem Winkel $\varepsilon_2$ zur Grundseite (121) orientierte Längsseite (124) oder eine gekrümmte Längsseite aufweist, wobei
- das erste und das zweite Konverterelement (11, 12) derart hintereinander angeordnet sind, dass die schräg orientierten bzw. gekrümmten Längsseiten (114, 124, 1140) in entgegengesetzte Richtungen weisen, wobei
- das erste Konverterelement (119 eine Länge $L_1$ aufweist, die von der Länge $L_2$ des zweiten Konverterelementes (12) verschieden ist,

**dadurch gekennzeichnet, dass**

die Oberseite (112) des ersten Konverterelementes (119 eine senkrecht zur Längsrichtung des ersten Konverterelementes (11) gemessene Breite $w_1$ besitzt, die von der Breite $w_2$ des zweiten Konverterelementes (12) verschieden ist, und/oder

die Längsseite (114) des ersten Konverterelementes (11) mit der Grundseite (111) des ersten Konverterelementes (11) einen Winkel $\varepsilon_1$ bildet, der von dem Winkel $\varepsilon_2$, den die Längsseite (124) des zweiten Konverterelementes (12) mit der Grundseite (121) des zweiten Konverterelementes (12) bildet, verschieden ist, wobei

die Breiten $w_1$, $w_2$ und/oder die Winkel $\varepsilon_1$, $\varepsilon_2$ so gewählt sind, dass sich in dem ersten und dem zweiten Konverterelement (11, 12) jeweils eine Mode ($\overline{e}_{00}$) ausbreitet, deren Polarisationsebene mit der jeweiligen Grundseite (111, 121) des Konverterelementes (11, 12) einen von 45° verschiedenen Winkel bildet.

9. Polarisationskonverter nach Anspruch 8, **dadurch gekennzeichnet, dass** das erste und/oder das zweite Konverterelement (11, 12) einen trapezförmigen Querschnitt aufweist.

10. Polarisationskonverter nach Anspruch 8 oder 9, **dadurch gekennzeichnet, dass** es sich bei dem ersten und dem zweiten Konverterelement (11, 12) um ein Halbleiterbauelement handelt.

11. Polarisationskonverter nach Anspruch 10, **dadurch gekennzeichnet, dass** das erste und das zweite Konverterelement (11, 12) jeweils zumindest eine auf einem Substrat angeordnete Halbleiterschicht aufweisen, wobei eine Oberseite des jeweiligen Substrats die jeweilige Grundseite (111, 121) des Konverterelementes (11, 12) definiert.

12. Polarisationskonverter nach einem der Ansprüche 8 bis 11, **dadurch gekennzeichnet, dass** die Breiten $w_1$, $w_2$ und/oder die Winkel $\varepsilon_1$, $\varepsilon_2$ so gewählt sind, dass die Winkel, die die Polarisationsebenen der sich in dem ersten Konverterelement (11) ausbreitenden Moden mit der Grundseite (111) des ersten Konverterelementes (11) bilden, verschieden sind von den Winkeln, die die Polarisationsebenen der sich in dem zweiten Konverterelement (12) ausbreitenden Moden mit der Grundseite (121) des zweiten Konverterelementes (12) bilden.

13. Polarisationskonverter nach einem der Ansprüche 8 bis 12, **dadurch gekennzeichnet, dass** die Längen $L_1$ und $L_2$ keine ganzzahligen Vielfachen voneinander sind.

**Claims**

1. A method for producing a polarization converter, comprising the following steps:

    - producing a first converter element (11) which has a base side (111), an upper side (112) extending parallel to the base side (111), and a longitudinal side (114) oriented obliquely at an angle $\varepsilon_1$ to the base side (111) or a curved longitudinal side;
    - producing a second converter element (12) which has a base side (121), an upper side (122) extending parallel to the base side (121), and a longitudinal side (124) oriented obliquely at an angle $\varepsilon_2$ to the base side or a curved longitudinal side;
    - arranging the first and the second converter element (11, 12) in series in such a way that the obliquely oriented or curved longitudinal sides (114, 124, 1240) point in opposite directions, wherein
    - the first converter element has (11) a length $L_1$ and its upper side (111) has a width $w_1$ measured perpendicularly to the longitudinal direction of the first converter element (11); and
    - the second converter element (12) has a length $L_2$ and its upper side (111) has a width $w_2$ measured perpendicularly to the longitudinal direction of the second converter element (12),
    **characterized in that**
    the production of the first and the second converter element (11, 12) comprises a determination of such different lengths $L_1$ and $L_2$ as well as different widths $w_1$ and $w_2$ and/or different angles $\varepsilon_1$ and $\varepsilon_2$ that after passing through the first and the second converter element (11, 12), a light wave polarized initially parallel to the base sides (111, 121) of the converter elements (11, 12) is polarized perpendicularly to the base sides (111, 121) of the converter elements, wherein
    the widths $w_1$, $w_2$ and/or the angles $\varepsilon_1$, $\varepsilon_2$ are chosen such that in each the first and the second converter element (11, 12) a mode ($\overline{e}_{00}$) propagates whose polarization plane forms an angle different from 45° with the respective base side (111, 121) of the converter element (11, 12).

2. The method according to claim 1, **characterized in that** the determination of the different lengths $L_1$ and $L_2$ as well as different widths $w_1$ and $w_2$ and/or the different angles $\varepsilon_1$ and $\varepsilon_2$ is effected by using a numerical optimization method with the quantities $L_1$, $L_2$ as well as $w_1$, $w_2$ and/or $\varepsilon_1$, $\varepsilon_2$ as variable parameters.

3. The method according to claim 2, **characterized in that** the arrangement comprising the first and the second converter element (11, 12) is described by a Jones matrix.

4. The method according to claims 2 and 3, **characterized in that** the components of the Jones matrix each depend on $L_1$, $L_2$ as well as $w_1$, $w_2$ and/or $\varepsilon_1$, $\varepsilon_2$, wherein by means of the optimization method $L_1$, $L_2$ as well as $w_1$, $w_2$ and/or $\varepsilon_1$, $\varepsilon_2$ are determined such that one of the components of a light wave exiting from the second converter element (12) becomes zero.

5. The method according to any of the preceding claims, **characterized in that** the length $L_1$ of the first converter element (11) and/or the length $L_2$ of the second converter element (12) is a rational fraction of the respective beat length.

6. The method according to any of the preceding claims, **characterized in that** the longitudinal side of the first and/or the second converter element (11, 12) has a curvature.

7. The method according to claim 6, **characterized in that** the curved longitudinal side is produced by an etching method.

8. A polarization converter which is produced in particular by the method according to any of claims 1 to 7, comprising

    - a first converter element (11) which has a base side (111), an upper side (112) extending parallel to the base side (111), and a longitudinal side (114) oriented obliquely at an angle $\varepsilon_1$ to the base side (111) or a curved longitudinal side;
    - a second converter element (12) which likewise has a base side (121), an upper side (122) extending parallel to the base side (121), and a longitudinal side (124) oriented obliquely at an angle $\varepsilon_2$ to the base side (121) or a curved longitudinal side; wherein
    - the first and the second converter element (11, 12) are arranged in series in such a way that the obliquely oriented or curved longitudinal sides (114, 124, 1140) point in opposite directions, wherein
- the first converter element (11) has a length $L_1$ which is different from the length $L_2$ of the second converter element (12),

**characterized in that**

the upper side (112) of the first converter element (11) has a width $w_1$ measured perpendicularly to the longitudinal direction of the first converter element (11), which is different from the width $w_2$ of the second converter element (12), and/or

the longitudinal side (114) of the first converter element (11) forms an angle $\varepsilon_1$ with the base side (111) of the first converter element (11), which is different from the angle $\varepsilon_2$ which the longitudinal side (124) of the second converter element (12) forms with the base side (121) of the second converter element (12), wherein

the widths $w_1$, $w_2$ and/or the angles $\varepsilon_1$, $\varepsilon_2$ are chosen such that in each the first and the second converter element (11, 12) a mode ($\vec{e}_{00}$) propagates whose polarization plane forms an angle different from 45° with the respective base side (111, 121) of the converter element (11, 12).

9. The polarization converter according to claim 8, **characterized in that** the first and/or the second converter element (11, 12) has a trapezoidal cross-section.

10. The polarization converter according to claim 8 or 9, **characterized in that** the first and the second converter element (11, 12) is a semiconductor component.

11. The polarization converter according to claim 10, **characterized in that** the first and the second converter element (11, 12) each include at least one semiconductor layer arranged on a substrate, wherein an upper side of the respective substrate defines the respective base side (111, 121) of the converter element (11, 12).

12. The polarization converter according to any of claims 8 to 11, **characterized in that** the widths $w_1$, $w_2$ and/or the angles $\varepsilon_1$, $\varepsilon_2$ are chosen such that the angles formed by the polarization planes of the modes propagating in the first converter element (11) with the base side (111) of the first converter element (11) are different from the angles formed by the polarization planes of the modes propagating in the second converter element (12) with the base side (121) of the second converter element (12).

13. The polarization converter according to any of claims 8 to 12, **characterized in that** the lengths $L_1$ and $L_2$ are no integer multiples of each other.

## Revendications

1. Procédé de fabrication d'un convertisseur de polarisation, comprenant les étapes :

- production d'un premier élément convertisseur (11) qui présente un côté de base (111), un côté supérieur (112) s'étendant parallèlement au côté de base (111) ainsi qu'un côté longitudinal (114) orienté obliquement sous un angle $\varepsilon_1$ par rapport au côté de base (111) ou un côté longitudinal incurvé ;
- production d'un deuxième élément convertisseur (12) qui présente un côté de base (121), un côté supérieur (122) s'étendant parallèlement au côté de base (121) ainsi qu'un côté longitudinal (124) orienté obliquement sous un angle $\varepsilon_2$ par rapport au côté de base ou un côté longitudinal incurvé ;
- agencement du premier et du deuxième élément convertisseur (11, 12) l'un derrière l'autre de telle sorte que les côtés longitudinaux (114, 124, 1240) orientés obliquement ou incurvés soient orientés dans des directions opposées, où
- le premier élément convertisseur (11) présente une longueur $L_1$ et son côté supérieure (111) présente une largeur $w_1$ mesurée perpendiculairement à la direction longitudinale du premier élément convertisseur (11) ; et
- le deuxième élément convertisseur (12) présente une longueur $L_2$ et son côté supérieure (111) présente une largeur $w_2$ mesurée perpendiculairement à la direction longitudinale du deuxième élément convertisseur (12),

**caractérisé en ce que**

la production du premier et du deuxième élément convertisseur (11, 12) comprend une détermination de longueurs $L_1$ et $L_2$ différentes ainsi que de largeurs $w_1$ et $w_2$ et/ou d'angles $\varepsilon_1$ et $\varepsilon_2$ différents tels qu'une onde lumineuse polarisée initialement parallèlement aux côtés de base (111, 121) des éléments convertisseurs (11, 12) est polarisée perpendiculairement aux côtés de base (111, 121) des éléments convertisseurs après avoir traversé le premier et le deuxième élément convertisseur (11, 12), où

les largeurs $w_1$, $w_2$ et/ou les angles $\varepsilon_1$, $\varepsilon_2$ sont choisis de telle sorte qu'il se propage dans le premier et le deuxième élément convertisseur (11, 12) respectivement un mode ($\vec{e}_{00}$) dont le plan de polarisation forme un angle différent de 45° avec le côté de base (111, 121) respectif de l'élément convertisseur (11, 12).

2. Procédé selon la revendication 1, **caractérisé en ce que** la détermination des différentes longueurs $L_1$ et $L_2$ ainsi que des différentes largeurs $w_1$ et $w_2$ et/ou des différents angles $\varepsilon_1$ et $\varepsilon_2$ s'effectue en utilisant un procédé d'optimisation numérique avec les grandeurs $L_1$, $L_2$ ainsi que $w_1$, $w_2$ et/ou $\varepsilon_1$, $\varepsilon_2$ comme paramètres variables.

3. Procédé selon la revendication 2, **caractérisé en ce que** l'agencement comportant le premier et le deuxième élément convertisseur (11, 12) est décrit par une matrice de Jones.

4. Procédé selon les revendications 2 et 3, **caractérisé en ce que** les composants de la matrice de Jones dépendent respectivement de $L_1$, $L_2$ ainsi que de $w_1$, $w_2$ et/ou $\varepsilon_1$, $\varepsilon_2$, où $L_1$, $L_2$ ainsi que $w_1$, $w_2$ et/ou $\varepsilon_1$, $\varepsilon_2$ sont déterminés à l'aide du procédé d'optimisation de telle sorte que l'une des composants d'une onde lumineuse sortant du deuxième élément convertisseur (12) devienne nulle.

5. Procédé selon l'une quelconque des revendications précédentes, **caractérisé en ce que** la longueur $L_1$ du premier élément convertisseur (11) et/ou la longueur $L_2$ du deuxième élément convertisseur (12) est une fraction rationnelle de la longueur de battement respective.

6. Procédé selon l'une quelconque des revendications précédentes, **caractérisé en ce que** le côté longitudinal du premier et/ou du deuxième élément convertisseur (11, 12) présente une incurvation.

7. Procédé selon la revendication 6, **caractérisé en ce que** le côté longitudinal incurvé est produit par un procédé de gravure.

8. Convertisseur de polarisation, fabriqué notamment par le procédé selon l'une quelconque des revendications 1 à 7, comprenant

   - un premier élément convertisseur (11) qui présente un côté de base (111), un côté supérieur (112) s'étendant parallèlement au côté de base (111) ainsi qu'un côté longitudinal (114) orienté obliquement sous un angle $\varepsilon_1$ par rapport au côté de base (111) ou un côté longitudinal incurvé ;
   - un deuxième élément convertisseur (12) qui aussi présente un côté de base (121), un côté supérieur (122) s'étendant parallèlement au côté de base (121) ainsi qu'un côté longitudinal (124) orienté obliquement sous un angle $\varepsilon_2$ par rapport au côté de base ou un côté longitudinal incurvé, où
   - le premier et le deuxième élément convertisseur (11, 12) sont agencés l'un derrière l'autre de telle sorte que les côtés longitudinaux (114, 124, 1140) orientés obliquement ou incurvés soient orientés dans des directions opposées, où
   - le premier élément convertisseur (11) présente une longueur $L_1$ qui est différente de la longueur $L_2$ du deuxième élément convertisseur (12),
   **caractérisé en ce que**
   le côté supérieur (112) du premier élément convertisseur (11) présente une largeur $w_1$ mesurée perpendiculairement à la direction longitudinale du premier élément convertisseur (11), qui est différente de la largeur $w_2$ du deuxième élément convertisseur (12), et/ou
   le côté longitudinal (114) du premier élément convertisseur (11) forme un angle $\varepsilon_1$ avec le côté de base (111) du premier élément convertisseur (11), qui est différent de l'angle $\varepsilon_2$ formé par le côté longitudinal (124) du deuxième élément convertisseur (12) avec le côté de base (121) du deuxième élément convertisseur (12), où les largeurs $w_1$, $w_2$ et/ou les angles $\varepsilon_1$, $\varepsilon_2$ sont choisis de telle sorte qu'il se propage dans le premier et le deuxième élément convertisseur (11, 12) respectivement un mode ($\vec{e}_{00}$) dont le plan de polarisation forme un angle différent de 45° avec le côté de base (111, 121) respectif de l'élément convertisseur (11, 12).

9. Convertisseur de polarisation selon la revendication 8, **caractérisé en ce que** le premier et/ou le deuxième élément convertisseur (11, 12) présente une section transversale trapézoïdale.

10. Convertisseur de polarisation selon la revendication 8 ou 9, **caractérisé en ce que** le premier et le deuxième élément convertisseur (11, 12) sont un dispositif semiconducteur.

**11.** Convertisseur de polarisation selon la revendication 10, **caractérisé en ce que** le premier et le deuxième élément convertisseur (11, 12) présentent chacun au moins une couche semi-conductrice agencée sur un substrat, un côté supérieur du substrat respectif définissant le côté de base respectif (111, 121) de l'élément convertisseur (11, 12).

**12.** Convertisseur de polarisation selon l'une quelconque des revendications 8 à 11, **caractérisé en ce que** les largeurs $w_1$, $w_2$ et/ou les angles $\varepsilon_1$, $\varepsilon_2$ sont choisis de telle sorte que les angles que forment les plans de polarisation des modes se propageant dans le premier élément convertisseur (11) avec le côté de base (111) du premier élément convertisseur (11), sont différents des angles que forment les plans de polarisation des modes se propageant dans le deuxième élément convertisseur (12) avec le côté de base (121) du deuxième élément convertisseur (12).

**13.** Convertisseur de polarisation selon l'une quelconque des revendications 8 à 12, **caractérisé en ce que** les longueurs $L_1$ et $L_2$ ne sont pas des multiples entiers l'une de l'autre.

# FIG 1

$\vec{E}_{TE}$

$\vec{E}_{out} = J\vec{E}_{TE}$

# FIG 2

## FIG 3

Konversion [%]

1% Toleranz = 110nm

5% Toleranz = 267nm

1.177

1.444

Breite Oberseite [µm]

## FIG 4

Konversion [%]

1% Toleranz= 254.0nm

5% Toleranz= 346.0nm

Breite Oberseite [µm]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013083493 A1